# EUROPEAN PATENT APPLICATION

(11) **EP 2 000 492 A2**
(43) Date of publication of application: **10.12.2008**
(21) Application number: 06761442.0
(22) Date of filing: 17.07.2006
(51) Int. Cl.: C08G 65/40

(54) **THE PROCESS FOR PREPARATION OF TERPOLYMER DERIVED FROM POLYETHER ETHERSULPHONE AND POLYETHER ETHERKETONE**

(30) Priority: 29.03.2006 CN 200610016723
(71) Applicant: Changchun Jilin University High.Tech Co. Ltd., Changchun, Jilin 130062 (CN)
(72) Inventor: WU, Zhongwen, Jilin 130062 (CN)
(74) Representative: Grünecker, Kinkeldey, Stockmair & Schwanhäusser Anwaltssozietät
(86) International application number: PCT/CN2006/001698
(87) International publication number: WO 2007/109931

(57) **Abstract**

The process for preparation of a series of terpolymer derived from polyether ether sulphone and polyether ether ketone is carried out in a single set of manufacture device applying terpolymerization technology. To the terpolymer reactor, charging the organic solvent, that is sulfolane or diphenyl sulfone, and the total molar weights of the 4,4'-dichlorodiphenyl sulfone and difluorobenzophenone are more than that of hydroquinone by 0.1-1.0%, and the solid content in the solution is 15-35%; then charging xylene which is 10-20% by mass of organic solvent, and beginning stirring, after heated to 75-80, charging the alkali metal carbonate which is more than the hydroquinone by 1-5 mol%, keeping heating. When the temperature rises to 220-260 or 280-320, hold the temperature and continue to react for 2-4 hours, and then pour the polymerized thick liquid into mill slowly to get polymer powder, boiled with acetone and deionized water repeatedly, then the finished powder is dried in the oven, finally obtaining the terpolymer derived from polyether ether sulphone and polyether ether ketone mentioned in the present invention.

## Description

### Technical Field

The present invention pertains to the area of polymer materials, and specifically, relates to a process for preparing a series of tercopolymer derived from polyether ether sulfone and polyether ether ketone based on ternary polymerization technology in a set of manufacture device.

### Background of Technology

Polysulfone polymers (currently commercially available products are polysulfone (PSU), polyether sulfone (PES) and polybiphenyl ether sulfone(PPSU) are relatively high in the grade of heat resistance among the amorphous polymers of thermoplastic super engineering plastics; and polyaryl ether ketone polymers(currently commercially available products are polyether ether ketone(PEEK), polyether ketane(PEK), and polyether ether ketone ketone(PEEKK)) are the highest in the grade of heat resistance among the crystalline polymers of thermoplastic super engineering plastics. Meanwhile, both of them have comprehensive characteristics of high strength, corrosion resistance, anti-irradiation, abrasion resistance, good dimensional stability and excellent electric properties and so on. Presently, polysulfone polymers and polyaryl ether ketone polymers are separately produced and marketed by different companies using different preparation processes. After studying the two kind of polymers for many years, we found that if a preparation technology of ternary copolycondensation is used to replace the conventional binary polymerization for polymer synthesis, and the proportions of-SO₂- group and -CO- ketone group in the polymer are adjusted, then amorphous polysulfone polymers or crystalline polyaryl ether ketone polymers can be prepared.

### Disclosure of Invention

An object of the present invention is to provide a preparation process, by which ternary polycondensates having basic physical properties that are the same as that of polysulfone resins, or that are the same as that of polyether ether ketone resins, or that are between the basic physical properties of polysulfone resins and of polyether ether ketone resins can be produced in a manufacture device by adjusting the proportions of three components, 4,4'-dichlorodiphenylsulfone, 4,4'-difluorobenzophenone and hydroquinone, in the ternary copolymerization system.

The reaction equation of the present invention is expressed as follows: 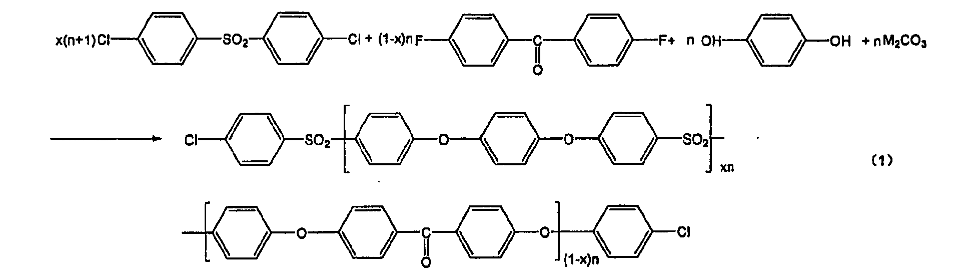 wherein x is arbitrarily value between 0.05 and 0.995; n is a integer of 1 or more; and M represents K or Na. Generally, mixed salts of K or Na is used, in which the proportion of mole number of one salt is arbitrarily value between 10% and 90% of total mole number of the mixed salts.

The preparation process comprises:
Charging an organic solvent sulfolane to a reactor of the ternary copolymerization system;
Sequentially charging 4, 4'-dichlorodiphenylsulfone, 4,4'-difluorobenzophenone and hydroquinone, wherein the total mole numbers of 4, 4'-dichlorodiphenylsulfone and 4,4'-difluorobenzophenone are 0.1 to 1.0% excess in respect to hydroquinone, and 4, 4'-dichlorodiphenylsulfone constitutes the excess; the mole number of 4,4'-difluorobenzophenone is 0.5% to 99.5% of total mole number of 4, 4'-dichlorodiphenylsulfone and 4,4'-difluorobenzophenone; and solid content in the solution(i.e., ratio of mass of polymer produced by the reaction to mass of polymer and solution) was 15 to 35%;
Then charging xylene which is 10-20% by mass of organic solvent, and beginning stirring;
Heating the reaction system to fully dissolve the above three monomers; Charging alkali metal carbonates(for example, mixed salts of K₂CO₃ and Na₂CO₃ in which the mole number of K₂CO₃ is 10% to 90% of total mole number of the mixed salts) which is more than the hydroquinone by 1-5 mol%, after elevating the temperature of the reaction system to 75°C-80°C;
Further rising up the temperature of the reaction system to azeotropic refluxing temperature of xylene and water;
Stopping the reflux and starting the distillation of xylene, when xylene in top layer of reflux tube began to become fully clear after all water produced by the reaction was entrained via azeotropism;
Rising up the temperature of the reaction system to 220°C-260°C, holding the temperature and continuing to react for 2-4 hours;
Terminating the reaction, slowly pouring polymerized viscous liquid into cold water in a pulverizer, and pulverizing under agitation to obtain polymer powders after precipitation;
Repeatedly boiling the polymer powders several times with deionized water until it was confirmed that all solvents and salts as byproduct in the reactants were removed by detection, and then
Drying the refined polymer powders in the oven to obtain tercopolymer resins derived from polyether ether sulfone and polyether ether ketone mentioned in the present invention.

The case of using diphenylsulfone as solvent was same as the case of using sulfolane as solvent, expect that after xylene was completely distilled out, the reaction temperature was gradually increased to the range from 280 to 320°C, and the reaction was isothermally performed for 2 to 4 hours, followed by termination of the reaction. Then, the reactants were poured into cold water to cool, pulverized into powders with a pulverizer, and subsequently filtrated to obtain solid powders. The powders were repeatedly boiled several times with acetone. After diphenylsulfone as solvent was completely removed, the boiling was again repeated several times using deionized water in order to remove salts as byproduct, and a tercopolymer derived from polyether ether sulfone and polyether ether ketone resins mentioned in the present invention was obtained.

### Description of the Drawings

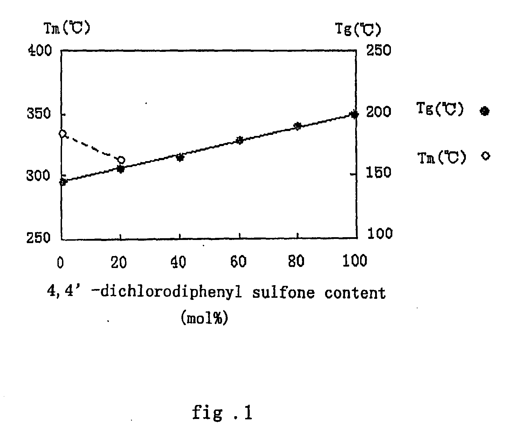

Figure 1 shows the relationship between the amount of 4, 4'-dichlorodiphenylsulfone and the glass transition temperature (Tg) and the melting point (Tm) of the copolymers. Figure 1 shows Tg and Tm values of the tercopolymers of respective components in the examples measured by DSC. The result shows that in the tercopolymers, when 4, 4'-dichlorodiphenylsulfone is a major component, the product exhibits amorphous structure of polysulfones(examples 1 to 4), whereas when proportion of 4,4'-difluorobenzophenone component is increased to certain extent, the product exhibits the crystallinity of polyaryl ether ketone polymer, and in particular when the proportion of 4,4'-difluorobenzophenone was more than 98%, a polymer with Tg of 145°C, Tm of 335°C, and physical properties comparable to that of polyether ether ketone(PEEK), can be obtained (examples 6 and 7).

### EmbodimentExample 1:

To 1000 ml of three-necked reaction flask provided with a thermometer, nitrogen inlet, condenser, water trap and stirrer, 520g of refined sulfolane was added( dimethylsulfone or diphenylsulfone etc. can be also adopted), and then 142.87g [0.4975mol, with the excess of 0.5% in respect to hydroquinone, that is, [(0.5mol-0.005mol)+0.5molx0.5%=0.495mol+0.0025mol=0.4975mol] of 4,4'-dichlorodiphenylsulfone 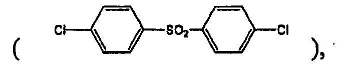 1.091g(0.005mol) of 4,4'-difluorobenzophenone 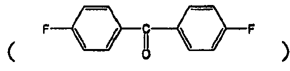 and 55.06g(0.5mol) of hydroquinone 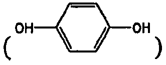 were sequentially added (where the weight of polymer produced by the reaction was 232g, and solid content was about 31%). After 78g of xylene(15% of solvents) was further added thereto, the resulted mixture was stirred and heated(the reaction flask was placed in the heating jacket) so as to dissolve all solids. Subsequently, the mixture was continuously heated to 80°C, and 35.24g(0.255mol, with the excess of 2%) of K₂CO₃ and 27.03g(0.255mol, with the excess of 2%) of NaCO₃(the total mole numbers of mixed salts was more than that of hydroquinone by 2%) were added. When the resulted mixture was continuously heated to around 150°C, the mixture of xylene and water began to reflux, while water produced by the reaction was entrained via azeotropism. Two layers appeared in the water trap, xylene in top layer began to reflux, and amount of water in bottom layer was continually increased. After all water produced by the reaction was nearly entrained (about 18 ml), xylene in top layer began to become clear, and reflux was kept for 20 minutes again after being transparent. When it was confirmed that there was no water in the system, xylene was distilled out from the system, and as well, the temperature of the system was continually increased up to 220°C, and at this point, the constant temperature was maintained to perform polymerization. After 3 hours, the reaction was terminated. The polymer solution was immediately poured into cold water in a pulverizer to cool while pulverizing, and solid powders were obtained.

Thus resulted powders were added into a three-necked flask after filtration, 1000ml of deionized water was added thereto, and the resulted mixture was boiled for one hour and then filtrated. The boiling was so repeated 7 to 8 times until solvents and salts contained in the polymer would reach the index point.

The refined polymer powders were dried at 130°C in the oven for 12 hours, so that moisture content was below 0.5%, and a copolymer shown in the equation (1) wherein x=0.99 is obtained.

The thermal property of the polymer was determined by DSC. The result indicated that it was an amorphous tercopolymer only having glass transition temperature of 198°C without melting point(see, figure 1 in detail).

### Example 2:

The charge ratios of materials in Example 1 were changed: 520g of refined sulfolane was added, and then 115.59g [0.4025mol, with the excess of 0.5% in respect to hydroquinone, (0.5mol-0.1mol)+0.5mol×0.5% =0.4mol+0.0025mol =0.4025mol] of 4, 4'-dichlorodiphenylsulfone, 21.82g(0.1mol) of 4,4'-difluorobenzophenone and 55.06g(0.5mol) of hydroquinone were sequentially added (where the weight of polymer produced by the reaction was 213g, and solid content was about 29%). Thereafter, the addition quantities and addition conditions of K₂CO_{3,} NaCO₃ and xylene were completely same as those in Example 1, and all reactions were completed according to the completely same reaction conditions of Example 1. The resulted polymer was refined in accordance with the completely same process and conditions of example 1, and a tercopolymer shown in the equation (1) wherein x=0.8 was obtained.

The resultant product was determined by using the method and conditions same as those in Example 1. The result indicated that it is an amorphous polymer only having Tg of 189°C.

### Example 3:

The charge ratios of materials in Example 1 were changed: 520g of refined sulfolane was added, and then 86.87g[0.3025mol, with the excess of 0.5% in respect to hydroquinone, that is, (0.5mol-0.2mol)+0.5mol×0.5%=0.3mol+0.0025mol=0.3025mol] of 4,4'-dichlorodiphenylsulfone, 43.64g(0.2mol) of 4,4'-difluorobenzophenone and 55.06g(0.5mol) of hydroquinone were sequentially added. Thereafter, the addition quantities and addition conditions of K₂CO₃, NaCO₃ and xylene were completely same as those in Example 1, and all reactions were completed according to the completely same reaction conditions of Example 1. The resulted polymer was refined in accordance with the completely same process and conditions of Example 1, and a tercopolymer shown in the equation (1) wherein x=0.6 was obtained.

The resultant product was determined by using the method and conditions same as those in Example 1. The result indicated that it is an amorphous polymer only having Tg of 178°C.

### Example 4:

The charge ratios of the materials in Example 1 were changed: 520g of refined sulfolane was added, and then 58.15g [0.2025mol, with the excess of 0.5% in respect to hydroquinone, that is, (0.5mol-0.3mol)+0.5mol×0.5%=0.2mol+0.0025mol=0.2025mol] of 4,4'-dichlorodiphenylsulfone, 65.46g(0.3mol) of 4,4'-difluorobenzophenone and 55.06g(0.5mol) of hydroquinone were sequentially added. Thereafter, the addition quantities and addition conditions of K₂CO₃, NaCO₃ and xylene were completely same as those in Example 1, and all reactions were completed according to the completely same reaction conditions of Example 1. The resulted polymer was refined in accordance with the completely same process and conditions of Example 1, and a tercopolymer shown in the equation (1) wherein x=0.4 was obtained.

The resultant product was determined by using the same method and conditions of Example 1. The result indicated that it is an amorphous polymer only having Tg of 165°C.

### Example 5:

The charge ratios of the materials in Example 1 were changed: 520g of refined sulfolane was added, and then 29.43g[0.1025mol, with the excess of 0.5% in respect to hydroquinone, that is, (0.5mo1-0.4mo1)+0.5mo1×0.5%=0.1mol+0.0025mo1=0.1025mol] of 4,4'-dichlorodiphenylsulfone, 87.28g(0.4mol) of 4,4'-difluorobenzophenone and 55.06g(0.5mol) of hydroquinone were sequentially added. Thereafter, the addition quantities and addition conditions of K₂CO₃, NaCO₃ and xylene were completely same as those in Example 1, and all reactions were completed according to the completely same reaction conditions of Example 1. The resulted polymer was refined in accordance with the completely same process and conditions of Example 1, and a tercopolymer shown in the equation (1) wherein x=0.2 was obtained.

The resultant product was measured by using the same method and conditions of Example 1. The result indicated that the product is different from those of Examples 1 to 4, that is, it was a crystalline polymer with obvious Tm in addition to Tg, and Tg and Tm thereof are 155°C and 310°C respectively.

### Example 6:

The charge ratios of the materials in Example 1 were changed: 520g of diphenylsulfone solvent was added, and then 2.87g [0.01mol, with the excess of 0.5% in respect to hydroquinone, that is, (0.5mol-0.4925mol)+0.5mol×0.5% =0.0075mol+ 0.0025mol=0.01mol] of 4,4'-dichlorodiphenylsulfone, 107.46g(0.4925mol) of 4,4'-difluorobenzophenone and 55.06g(0.5mol) of hydroquinone were sequentially added. Thereafter, addition quantities and conditions of K₂CO₃, Na₂CO₃ and xylene were completely same as those in Example 1. But after xylene was completely distilled out, the reaction temperature was gradually increased, and finally, the reaction was kept at 320°C for 3 hours, and then terminated. The reactants were poured into cold water to cool, pulverized into powders with a pulverizer, and subsequently filtrated to obtain solid powders.

The powders were placed into a three-necked flask and 1000 ml of acetone was added thereto. The mixture was boiled under reflux for one hour, and after filtration, the boiling was again repeated 6 times with acetone according to this process until diphenylsulfone as solvent was completely removed. The boiling was again repeated 7 to 8 times using deionized water in order to remove salts as byproduct, and a tercopolymer shown in the equation (1) wherein x=0.02 was obtained.

The resultant product was measured by using the same method and conditions of Example 1, and the result is same as that of example 5, that is, the resulted polymer was a crystalline polymer having both Tg and Tm, and Tg and Tm thereof are 145°C and 335°C respectively, which was comparable to PEEK.

### Example 7:

The charge ratios of the materials in Example 1 were changed : 520g of diphenylsulfone solvent was added, and then 2.15g[0.0075mol, with the excess of 0.5% in respect to hydroquinone, that is, (0.5mol-0.495mol)+0.5mol×0.5%= 0.005mol+0.0025mol=0.0075mol] of 4,4'-dichlorodiphenylsulfone, 108.01g (0.495mol) of 4,4'-difluorobenzophenone and 55.06g(0.5mol) of hydroquinone were sequentially added. Thereafter, addition quantities and conditions of K₂CO₃, NaCO₃ and xylene were completely same as those in Example 1. But after xylene was completely distilled out, the reaction temperature was gradually increased, and finally, the reaction was kept at 320°C for 3 hours, and then terminated. The reactants were poured into cold water to cool, pulverized into powders with a pulverizer, and subsequently filtrated to obtain solid powders.

The powders were placed into a three-necked flask and 1000 ml of acetone was added. The mixture was boiled under reflux for one hour, and after filtration, the boiling was again repeated 6 times with acetone according to this process until diphenylsulfone as solvent was completely removed. The boiling was again repeated 7 to 8 times using deionized water in order to remove salts as byproduct, and a tercopolymer shown in the equation (1) wherein x=0.015 was obtained.

The resultant product was measured by using the same method and conditions of Example 1, and the result is same as that of example 5, that is, the resulted polymer was a crystalline polymer having both Tg and Tm, and Tg and Tm thereof are 145°C and 335°C respectively, which was comparable to PEEK.

### Example 8:

The charge ratios of the materials in Example 1 were changed : 520g of diphenylsulfone solvent was added, and then 1.44g[0.005mol, with the excess of 0.5% in respect to hydroquinone, that is, (0.5mol-0.4975mol)+0.5mol×0.5%= 0.0025mol+0.0025mol=0.005mol] of 4, 4'-dichlorodiphenylsulfone, 108.55g(0.4975mol) of 4,4'-difluorobenzophenone and 55.06g(0.5mol) of hydroquinone were sequentially added. Thereafter, addition quantities and conditions of K₂CO₃, Na₂CO₃ and xylene were completely same as those in Example 1. But after xylene was completely distilled out, the reaction temperature was gradually increased, and finally, the reaction was kept at 320°C for 3 hours, and then terminated. The reactants were poured into cold water to cool, pulverized into powders with a pulverizer, and subsequently filtrated to obtain solid powders.

The powders were placed into a three-necked flask and 1000 ml of acetone was added thereto. The mixture was boiled under reflux for one hour, and after filtration, the boiling was again repeated 6 times with acetone according to this process until diphenylsulfone as solvent was completely removed. The boiling was again repeated 7 to 8 times using deionized water in order to remove salts as byproduct, and a tercopolymer shown in the equation (1) wherein x=0.01 was obtained.

The resultant product was measured by using the same method and conditions of Example 1, and the result is same as that of example 5, that is, the resulted polymer was a crystalline polymer having both Tg and Tm, and Tg and Tm thereof are 145°C and 335°C respectively, which was comparable to PEEK.

The measured result of these examples were shown in figure 1. When the charge ratio X>0.2, the resultant polymers were amorphous tercopolymers only having Tg similar to polysulfones; whereas when the charge ratio X < 0.2, crystalline tercopolymers of polyether ketones having both of Tg and Tm were obtained. Amorphous polymers of Tg from 225°C to 165°C or crystalline polymers of Tm from 335°C to 310°C can be obtained by adjusting the charge ratios of the three monomers, 4,4'-dichlorodiphenylsulfone, 4,4'-difluorobenzophenone and hydroquinone.

## Claims

1. A process for preparing tercopolymer derived from polyether ether sulfone and polyether ether ketone , which is expressed by the following reaction equation: 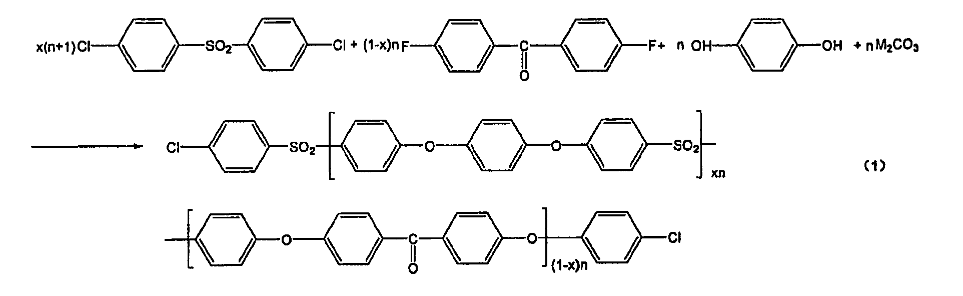 wherein x is arbitrarily value between 0.05 and 0.995; M represents K or Na; and n is a integer of 1 or more.

2. The process for preparing terpolymer derived from polyether ether sulfone and polyether ether ketone according to claim 1, which comprises:
charging an organic solvent sulfolane to a reactor of the ternary copolymerization system;
sequentially charging 4,4'-dichlorodiphenylsulfone, 4,4'-difluorobenzophenone and hydroquinon, wherein the total molar numbers of 4, 4'-dichlorodiphenylsulfone and 4,4'-difluorobenzophenone is 0.1 to 1.0% excess in respect to hydroquinone, and 4, 4'-dichlorodiphenylsulfone constitutes the excessive; the mole number of 4, 4'-dichlorodiphenylsulfone is 0.5% to 99.5% of total mole number of 4, 4'-dichlorodiphenylsulfone and 4,4'-difluorobenzophenone; and solid content in the solution is 15 to 35%;
then charging xylene which is 10-20% by mass of organic solvent, and beginning stirring;
charging alkali metal carbonates which is more than the hydroquinone by 1-5 mol%, after elevating the temperature of the reaction system to 75°C-80°C;
elevating the temperature of the reaction system to 220°C-260°C, holding the temperature and continuing to react for 2-4 hours;
terminating the reaction, and slowly pouring the polymerized viscous liquid into cold water in a pulverizer and pulverizing under agitation to obtain polymer powders after precipitation;
repeatedly boiling the polymer powders several times with deionized water until it was confirmed that all solvents and salts as byproduct in the reactants were removed by detection; and then
drying the refined polymer powders in the furnace to obtain the tercopolymer resins derived from polyether ether sulfone and polyether ether ketone mentioned in the present invention.

3. The process for preparing terpolymer derived from polyether ether sulfone and polyether ether ketone according to claim 1, which comprises:
charging an organic solvent diphenylsulfone to a reactor of the ternary copolymerization system,
sequentially charging 4, 4'-dichlorodiphenylsulfone, 4,4'-difluorobenzophenone and hydroquinone, wherein the total molar numbers of 4,4'-dichlorodiphenylsulfone and 4,4'-difluorobenzophenone is 0.1 to 1.0% excess in respect to hydroquinone, and 4, 4'-dichlorodiphenylsulfone constitutes the excess; the mole number of 4, 4'-dichlorodiphenylsulfone is 0.5% to 99.5% of total mole number of 4, 4'-dichlorodiphenylsulfone and 4,4'-difluorobenzophenone; and solid content in the solution is 15 to 35%;
then charging xylene which is 10-20% by mass of organic solvent, and beginning stirring;
charging alkali metal carbonates which is more than the hydroquinone by 1-5 mol%, after elevating temperature of the reaction system to 75°C-80°C;
elevating the temperature of the reaction system to 280°C-320°C, holding the temperature and continuing to react for 2-4 hours;
terminating the reaction, and pouring the resultant product into cold water, pulverizing into powders with a pulverizer, and subsequently filtrating to obtain solid powders;
repeatedly boiling the powders several times with acetone until diphenylsulfone as solvent was completely removed; and
repeatedly boiling the powders several times using deionized water to remove salts as byproduct, to obtain terpolymer resin derived from polyether ether sulfone and polyether ether ketone mentioned in the present invention.

4. The process for preparing terpolymer derived from polyether ether sulfone and polyether ether ketone tercopolymers according to claim 2 or 3, wherein the alkali metal carbonates are mixed salts of K₂CO₃ and Na₂CO₃, in which the mole number of K₂CO₃ is 10% to 90% of total mole number of the mixed salts.

5. The process for preparing terpolymer derived from polyether ether sulfone and polyether ether ketone according to claim 2 or 3, wherein amorphous polymers of Tg from 225°C to 165°C or crystalline polymers of Tm from 335°C to 310°C can be obtained by adjusting the charge ratios of the three monomers, 4,4'-dichlorodiphenylsulfone, 4,4'-difluorobenzophenone and hydroquinone.

6. The process for preparing terpolymer derived from polyether ether sulfone and polyether ether ketone according to claim 4, wherein amorphous polymers of Tg from 225°C to 165°C or crystalline polymers of Tm from 335°C to 310°C can be obtained by adjusting the charge ratios of the three monomers, 4,4'-dichlorodiphenylsulfone, 4,4'-difluorobenzophenone and hydroquinone.
